# EUROPEAN PATENT SPECIFICATION

(11) **EP 1 715 374 B1**
(45) Date of publication and mention of the grant of the patent: **19.03.2008**
(21) Application number: 05103239.9
(22) Date of filing: 21.04.2005
(51) Int. Cl.: G02F 1/1362, H01L 27/28

(54) **Active matrix circuit, active matrix display and method for manufacturing the same**
Aktivmatrix-Schaltung, Aktivmatrix-Anzeige und deren Herstellungsverfahren
Circuit à matrice active, affichage à matrice active et leur procédé de fabrication

(43) Date of publication of application: 25.10.2006
(73) Proprietor: Samsung SDI Germany GmbH, 12459 Berlin (DE); Samsung SDI Co., Ltd., Suwon-si 445-970 Gyeonggi-do (KR)
(72) Inventor: Mathea, Arthur, 14197, Berlin (DE); Fischer, Jörg, 13053, Berlin (DE)
(74) Representative: Hengelhaupt, Jürgen

(56) References cited:
- WO-A-01/17029
- WO-A-20/04070466
- US-A1- 2002 105 614

## Description

### FIELD OF THE INVENTION

The invention relates to an active matrix back plane circuit and a method for manufacturing the same. More specifically the invention relates to an active matrix back plane circuit and an active matrix display for electrical field controlled display elements like electrochromic display elements, electrophoretic display elements or liquid crystal display elements.

### BACKGROUND OF THE INVENTION

Organic circuits such as organic active matrix circuits for flat panel displays (e.g. electrophoretic displays) became more and more important in the recent years. One limiting issue is still the cost factor. Therefore it is desirable to realize displays based on low cost processes.

The use of organic-based field effects for an electronic display is described in WO 99/53371 which discloses a display consisting of an organic TFT matrix with a display media of microencapsulated electrophoretic particles.

WO 03/098696 describes the use of a lithographic technique to provide a patterned layer and for depositing a semiconductor material at localized regions using an inkjet printing technique.

US 2003/0059975 describes a method of confining inkjet-printed semiconductors on surface areas that are hydrophobic, and others that are hydrophilic. According to the disclosed method it is necessary to provide a patterning step of the surface in order to achieve a confinement of the ink to either the hydrophobic or the hydrophilic substrate areas.
US 2002/0105614 describes a lithographic process to fabricate a TFT matrix provided with storage capacitors. These are formed by superposition of a gate line with the pixel electrode of an adjacent pixel.

According to the methods provided by the state of the art the structuring of active matrix circuits (and active matrix displays) requires a lot of expensive patterning steps for the definition of the respective organic thin film transistors, storage capacitors and the respective signal lines (e.g. date lines and select lines).

### OBJECTS OF THE INVENTION

Therefore it is an object of the present invention to provide a structure for active matrix circuits for example for electrical field controlled display elements like electrochromic display elements, electrophoretic display elements or liquid crystal display elements which require low cost and low resolution processes, i.e. more simple manufacturing techniques. Furthermore the active matrix circuits shall be compatible to flexible displays. A further object of the present invention is to provide a method for manufacturing active matrix circuits for electrical field controlled display elements like electrochromic display elements, electrophoretic display elements or liquid crystal display elements which can be realized at lower costs compared to the methods of the state of the art.

### SUMMARY OF THE INVENTION

In one aspect of the invention an active matrix back plane circuit comprises a plurality of active matrix elements, a plurality of data lines and a plurality of select lines, each active matrix element comprising a pixel electrode, an organic thin film transistor and a storage capacitor, the organic thin film transistor comprising a source electrode, a drain electrode, a gate electrode and semiconducting material disposed between source electrode and drain electrode, the storage capacitor comprising a first electrode, a second electrode and an insulating material between first electrode and second electrode, where the source electrode is connected to a data line; the drain electrode is connected to the pixel electrode and to the first electrode of the storage capacitor; the gate electrode is connected to a select line and the second electrode of the storage capacitor is connected to an adjacent select line, wherein the gate electrode of the active matrix element and the second electrode of the capacitor of an adjacent active matrix element form one straight line.

The structure of the active matrix circuit according to the present invention comprises a unique design of the gate electrode which incorporates the second electrode of the capacitor of an adjacent active matrix element. This structure makes it possible to use simple low resolution techniques and direct patterning for the several device elements (layers), like organic semiconductor, gate electrode and storage capacitor. Direct patterning and low temperature technologies such as inkjet printing, screen printing, offset printing or physical vapor deposition through shadow masks can be used as low resolution processes.
According to the present invention two fabrication technologies (high (<50µm) and low (>50µm) resolution patterning) are combined in order to manufacture the complete structure of the active matrix back plane circuit which comprises a high performance organic thin film transistor integrated into a display switching array (active matrix element). The high resolution patterning processes can be used for the application of source electrode structures and drain electrode structures for organic thin film transistors. All other layers can be patterned using low resolution technologies. The patterning of all other layers is possible because the gate electrode incorporates the second electrode of the capacitor of an adjacent active matrix element which leads to a very simple structure for the active matrix elements.

In a preferred embodiment of the invention the gate electrode, the select line in the area of the active matrix element and the second electrode of the capacitor of an adjacent active matrix element form one straight line. In another preferred embodiment of the invention the gate electrode of the active matrix element, the part of the select line which overlaps the organic thin film transistor of the respective active matrix element and the pixel electrode of an adjacent active matrix element as well as the second electrode of the capacitor of the adjacent active matrix element form one straight line. In this embodiment the gate electrode incorporates the second electrode of the capacitor of an adjacent active matrix element and a part of the select line of the respective active matrix element.

Preferably source electrode and the drain electrode of active matrix elements can be interdigitated and the organic thin film transistor of an active matrix element is situated directly beside the storage capacitor of an adjacent active matrix element. Furthermore it is preferred that the first select line of an active matrix element forms the second electrode of the capacitor of an adjacent active matrix element.

The method for producing an active matrix circuit comprises the following steps according to the present invention:
- application of a plurality of data lines, a plurality of first pixel electrodes, a plurality of first electrodes of a storage capacitor on a substrate, a plurality of source electrodes and a plurality of drain electrodes, thereby defining the respective areas of a plurality of active matrix elements,
- application of semiconducting material between the pairs of source electrodes and drain electrodes,
- application of a layer of an insulating material over source electrodes, drain electrodes, semiconducting material and first electrodes of the storage capacitor,
- application of a plurality of gate electrodes, a plurality of select lines and a plurality of second electrodes of the storage capacitors, the second electrodes contacting the gate electrodes,
wherein the gate electrode of an active matrix element, at least a part of the respective select line and the second electrode of the storage capacitor of an adjacent active matrix element are formed by the application of one straight line of a conducting material.

Preferably the gate electrode of an active matrix element, the respective select line and the second capacitor electrode of an adjacent active matrix element are applied by inkjet printing, screen printing, offset printing or physical vapour deposition through a shadow mask. Advantageously the said elements (gate electrode, respective select line and the second capacitor electrode of an adjacent active matrix element) can be realized by the use of low resolution processes which lead to an inexpensive manufacturing of the active matrix back plane circuit.

An active matrix display according to the present invention comprises a plurality of pixel elements, a plurality of data lines and a plurality of select lines, each pixel element comprising a first pixel electrode and a display element, an organic thin film transistor and a storage capacitor, the display element comprising a second pixel electrode, the organic thin film transistor comprising a source electrode, a drain electrode, a gate electrode and semiconducting material disposed between source electrode and drain electrode, an insulating material between gate electrode and semiconducting material, the storage capacitor comprising a first electrode, a second electrode and an insulating material between first electrode and second electrode, where the source electrode is connected to a data line, the drain electrode is connected to the first pixel electrode and to the first electrode of the storage capacitor, the gate electrode is connected to a select line and the second electrode of the storage capacitor is connected to an adjacent select line, where the gate electrode of one pixel element and the second electrode of the capacitor of an adjacent pixel element form one straight line.

Preferably the gate electrode and the select line and the second electrode of the capacitor of an adjacent pixel element form one straight line. Therefore it is preferred that the organic thin film transistor of an pixel element is situated directly beside the storage capacitor of an adjacent pixel element. Preferably the display element used in the display is an electrical field controlled display elements like an electrochromic display element, an electrophoretic display element or liquid crystal display element.

### BRIEF DESCRIPTION OF THE DRAWINGS

The present invention will now be described by way of example with reference to the accompanying drawings, in which:
- Fig. 1: shows a schematic top view of an active matrix display,
- Fig. 2: shows a schematic top view of an active matrix element,
- Fig. 3: shows a sectional view of an active matrix element,
- Fig. 3a: shows a sectional view of an active matrix element in two-part form,
- Fig. 4 a: shows a schematic top view of a manufacturing step of an active matrix element according to an embodiment of the invention, in which pixel electrode, source electrode, drain electrode, first electrode of the storage capacitor and data line are applied,

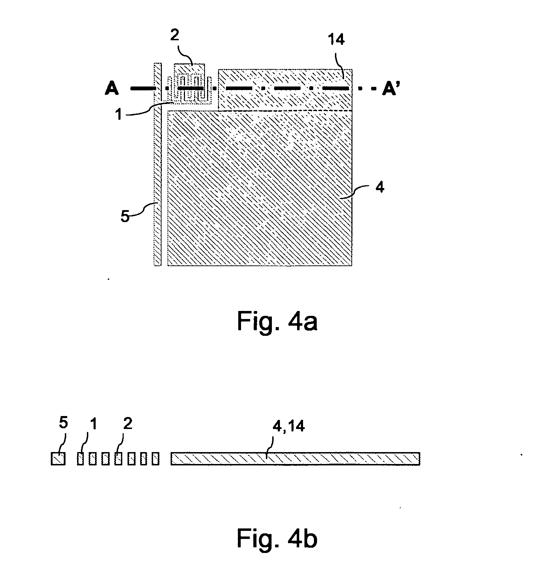

- Fig. 4 b: shows the active matrix element of Fig. 4a in a sectional view along the line A-A',

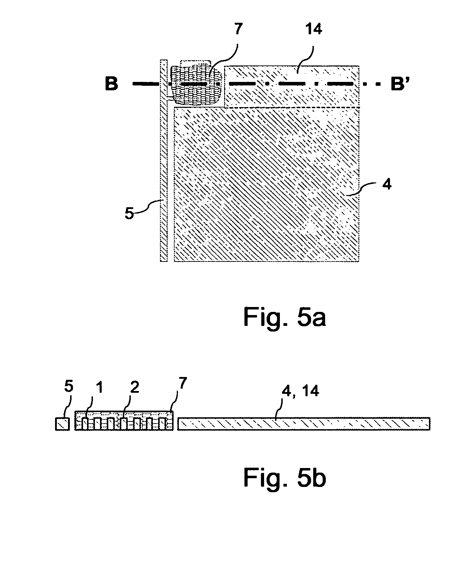

- Fig. 5 a: shows a schematic top view of a manufacturing step of an active matrix element according to an embodiment of the invention, in which the semiconducting material is applied,
- Fig. 5 b: shows the active matrix element of Fig. 5a in a sectional view along the line B-B',

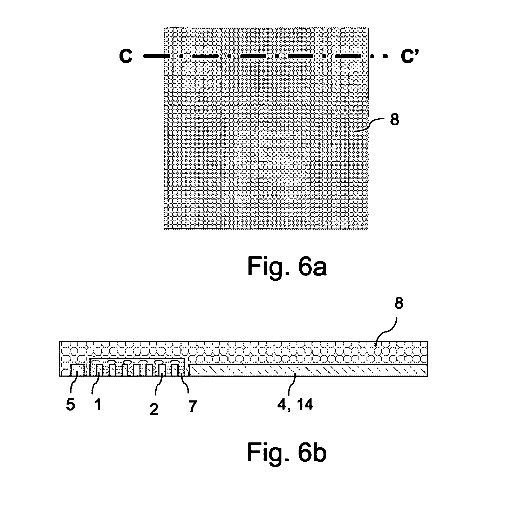

- Fig. 6 a: shows a schematic top view of a manufacturing step of an active matrix element according to an embodiment of the invention, in which an insulating layer is applied,
- Fig. 6 b: shows the active matrix element of Fig. 6a in a sectional view along the line C-C',

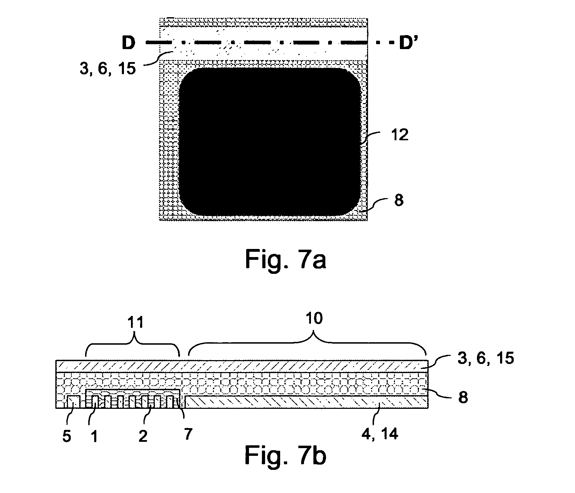

- Fig. 7 a: shows a schematic top view of a manufacturing step of an active matrix element according to an embodiment of the invention, in which gate electrode, select line and the second electrode of the storage capacitor are applied,
- Fig. 7 b: shows the active matrix element of Fig. 7a in a sectional view along the line D-D',

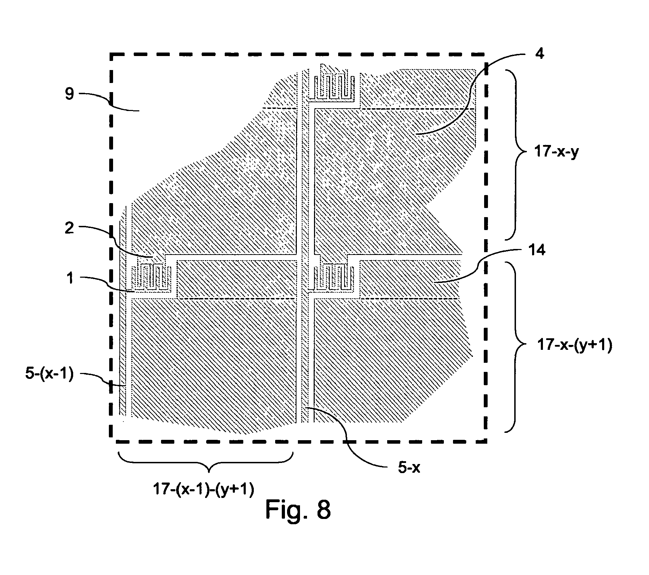

- Fig. 8: shows a section of a schematic top view of a manufacturing step of a plurality of active matrix elements of an active matrix circuit according to an embodiment of the invention, in which a plurality of pixel electrodes, a plurality of source electrodes, a plurality of drain electrodes, a plurality of the first electrodes of storage capacitors and a plurality of data lines are applied,

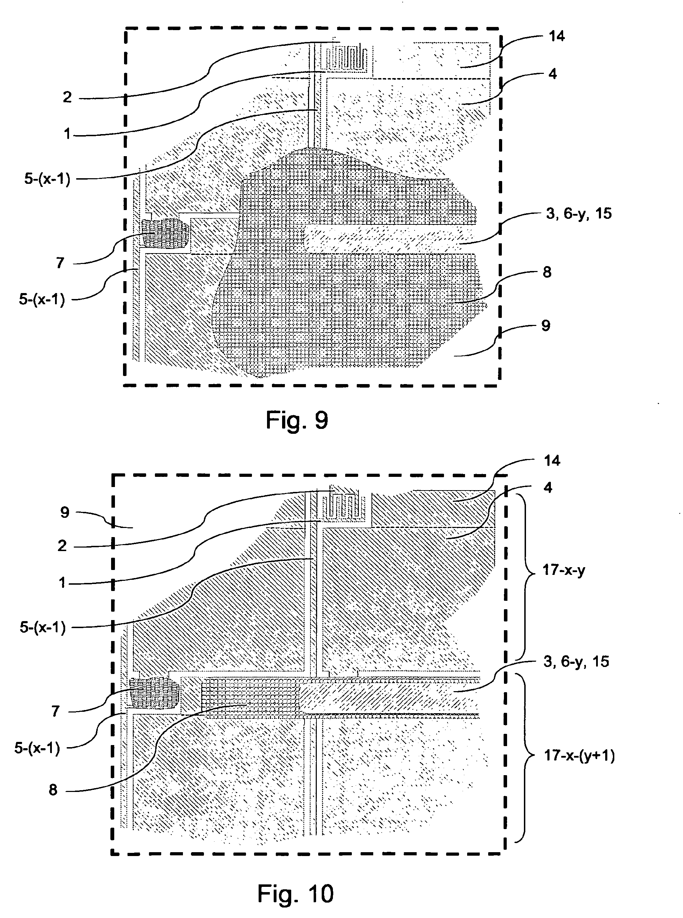

- Fig. 9: shows a section of a schematic top view of a manufacturing step of a plurality of active matrix elements of an active matrix circuit according to an embodiment of the invention, in which semiconducting material for a plurality of pairs of source electrodes and drain electrodes, a layer of insulating material, a plurality of the second electrodes of storage capacitors, a plurality of select lines and a plurality of gate electrodes are applied, and

- Fig. 10: shows a section of a schematic top view of a manufacturing step of a plurality of active matrix elements of an active matrix circuit according to an embodiment of the invention, in which the layer of insulating material is patterned in order to define the pixel areas of the active matrix elements.

### DETAILED DESCRIPTION OF PREFERRED EMBODIMENTS

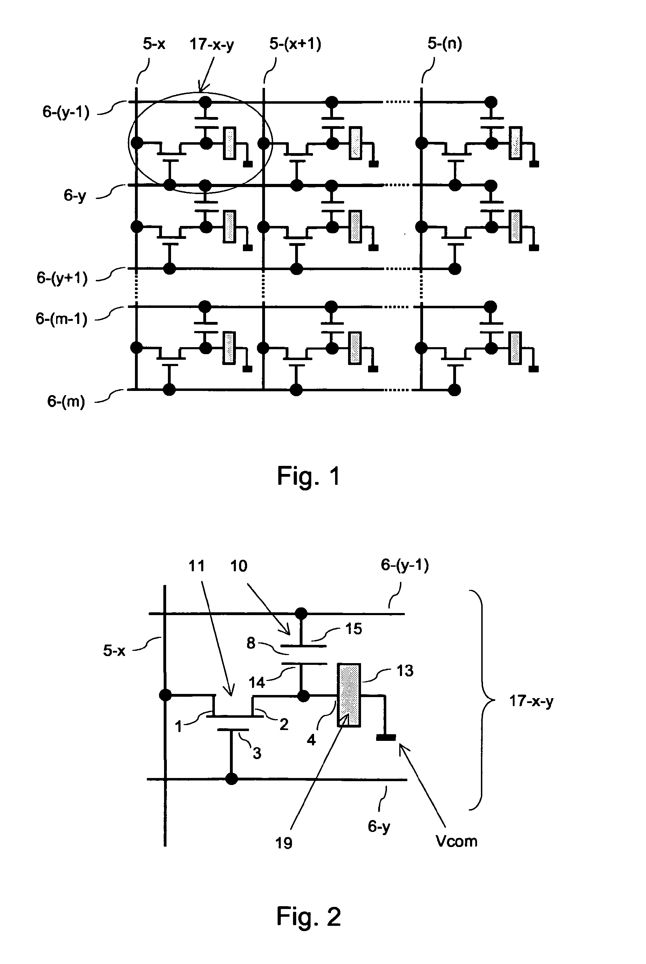

Fig. 1 shows a schematic top view of an active matrix display comprising n data lines 5 and m select lines 6. The matrix element in the x^{th}-row and the y^{th}-column of the active matrix display is indicated by the reference sign 17-x-y.

Fig. 2 shows a schematic view of the active matrix element 17-x-y of Fig. 1. The shown matrix element 17-x-y is arranged in the x^{th}-row and the y^{th}-column of the active matrix display of Fig. 1. The matrix element 17-x-y comprises an organic thin film transistor 11, the organic thin film transistor 11 comprising source electrode 1, drain electrode 2, gate electrode 3, semiconducting material (not shown in Fig. 2) disposed between source electrode 1 and drain electrode 2 and insulating material 8 (not shown in Fig. 2) disposed between gate electrode 3 and semiconducting material. The matrix element 17-x-y further comprises a first (pixel) electrode 4 and a storage capacitor 10, the storage capacitor 10 comprising a first electrode 14, a second electrode 15 and insulating material 8 disposed between first electrode 14 and second electrode 15. The matrix element 17-x-y further comprises a display element 19, the display element 19 comprising a second pixel electrode 13. The display element 19 comprises further functional layer(s) 21 depending on its type, e.g. in the case of an electrophoretic display the display element 19 further comprises a functional layer with electrical field controlled particles situated between first pixel electrode 4 and second pixel electrode 13. The functional layer(s) 21 can alternatively be electrochromic display functional layer(s) or liquid crystal display functional layer(s).

The second pixel electrode 13 is connected to a common potential (Vcom). The source electrode 1 of the organic thin film transistor 11 is connected to the data line 5-x of the x^{th}-row. The gate electrode 3 of the organic thin film transistor 11 is connected to the select line 6-y of the y^{th}-column. The drain electrode 2 of the organic thin film transistor 11 is connected to the first electrode 14 of the storage capacitor 10 and to the first pixel electrode 4. Furthermore the second electrode 15 of the storage capacitor 10 is connected to the select line 6-(y-1) of the (y-1)^{th}-column.

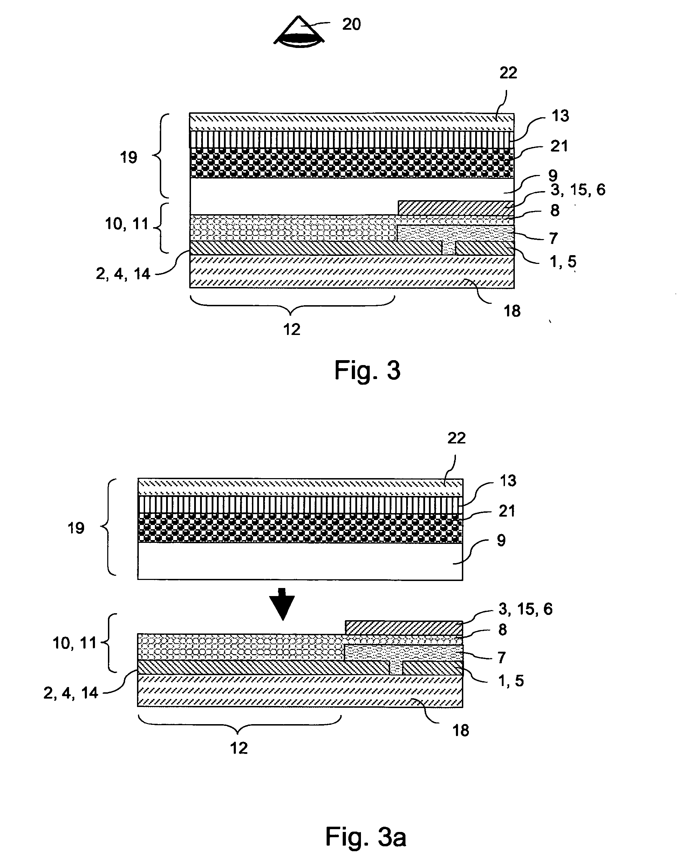

Fig. 3 shows a sectional view of the active matrix element 17-x-y. Source electrode 1, drain electrode 2, the first pixel electrode 4 and first electrode 14 of the storage capacitor 10 are disposed on the substrate 18. A semiconducting material 7 is disposed between source electrode 1 and drain electrode 2. Furthermore an insulating material 8 is disposed over the whole structure. After this the gate electrode 3, the second electrode 15 of the storage capacitor and the select line 6 are disposed. Furthermore a buffer layer 9 is disposed. The display element 19 furthermore comprises a display element substrate 22 functioning as a carrier substrate, the second display electrode 13and a functional display layer 21. The light reflected by the display element 19 can be perceived by an observer 20.

Fig. 3a shows a sectional view of the active matrix element 17-x-y in a two-part form. The first pixel electrode 4 is part of the active matrix back plane circuit (lower part) which comprises the components 1-8, 10-12, 14-15 and 18 whereby the second pixel electrode 13 is part of the display element 19 (upper part) which comprises the components 9, 13, 21 and 22. It shall be understood that the active matrix element 17-x-y comprises two components, namely active matrix element and display element 19. Usually a display element comprises both, first pixel electrode and second pixel electrode. In this application the display element only comprises the second pixel electrode. Strictly speaking the display element 19 is only a preliminary product of a display element, i.e. a preliminary display element. In Fig. 3a the display element 19 can be laminated onto the active matrix element (illustrated by the arrow) thereby arriving at the active matrix element 17-x-y.
Fig. 4a shows a schematic top view of a manufacturing step of an active matrix element according to an embodiment of the invention, in which the first pixel electrode 4, the source electrode 1, the drain electrode 2, the first electrode 14 of the storage capacitor 10 and the data line 5 are applied on a substrate (not shown). The source electrode 1 and the drain electrode 2 are interdigitated in order to realise a high performance thin film transistor. The first pixel electrode 4, the first electrode 14 of the storage capacitor 10, the source electrode 1 and drain electrode 2 are formed side by side by one layer. Fig. 4b shows the active matrix element of Fig. 4a in a sectional view along the line A-A'.

Fig. 5a shows a schematic top view of a manufacturing step of the active matrix element in which the semiconducting material 7 is applied in the area of interdigitated source electrode 1 and drain electrode 2. Fig. 5b shows the active matrix element of Fig. 5a in a sectional view along the line B-B'. As a next step an insulating layer 8 is applied over the whole active matrix element (shown in Fig. 6a and 6b).

Fig. 7a shows a schematic top view of a manufacturing step of the active matrix element in which the gate electrode 3, the select line 6 and the second electrode 15 of the storage capacitor 10 are applied. According to the invention gate electrode 3, select line 6 and second electrode 15 of the storage capacitor 10 are formed by the application of one straight line. An overlap region between first pixel electrode 4 and a select line 6 of the previous active matrix element defines the storage capacitor 10. Simple electrochromic and electrophoretic elements are possible as display elements 19. The display elements 19 can be laminated on the passivated organic active matrix. A display based on the active matrix element according to the invention can be addressed line by line by activating the select line 6 with a negative voltage (e.g. -20V). The organic thin film transistor 11 is switched on and a negative data voltage (e.g. -15V) can turn the display pixel (element 19) on and will charge the storage capacitor 10. Non selected rows are switched to ground. The storage capacitor 10 stores the supply voltage for the display element 19 during the frame time.

According to the invention the gate electrode 3, the second electrode 15 of the storage capacitor 10 and select line 6 (i.e. at least a part of the select line) are incorporated in the same component. The transistor 11 is situated directly beside the capacitor 10, so both elements can be produced by one straight line. Therefore this structure shows a higher fill factor, due to the fact that there is no extra area for the select line 6 and for the storage capacitor 10 needed. This straight forward design, single line switch is optimal compatible with inkjet printing processes. Only one straight line combines gate electrode, (second electrode of the) capacitor and select line. Fig. 7b shows the active matrix element of Fig. 7a in a sectional view along the line D-D'.

The structure according to the present invention provides the following advantages:
- higher fill factor due to integrated select line in gate electrode and capacitor,
- simple process, only one masking step for source and drain patterning to reach a high performance organic thin film transistor, the following processes are low resolution compatible,
- no complicated structures for low resolution processes, only one straight line combines gate electrode and capacitor and select line,
- low resolution process is roll-to-roll compatible,
- due to simple process, high yield can be reached easily,
- no VIA holes are needed by using electrochromic and electrophoretic display elements, and
- cost effective ink jet printing can be used to pattern the organic semiconductor, the organic insulator, the gate, the capacitor and select line.

For the substrate 18 glass or foil can be used. A lithography process can be used to pattern source and drain electrodes 1, 2 and the pixel area 12. The organic semiconductor 7 can directly be patterned by a low temperature process e.g. inkjet printing. The deposition of an organic dielectric layer 8 can be carried out by spin coating or inkjet printing. The patterning of select line 6 can be carried out by inkjet printing or evaporation through a shadow mask. The application of an optional passivation or buffer layer 9 can be carried out by spin coating.

Fig. 8 shows a section (i.e. four active matrix elements 17) of a schematic top view of a manufacturing step of a plurality of active matrix elements 17 of an active matrix circuit according to an embodiment of the invention, in which a plurality of pixel electrodes 4, a plurality of source electrodes 1, a plurality of drain electrodes 2, a plurality of the first electrodes 14 of storage capacitors 10 and a plurality of data lines 5 are applied. The described processes are analogous to the processes describes in Fig. 4 - Fig. 7. From Fig. 8-10 can be seen that the select line 6-y of element 17-x-y, the gate electrode 3 of element 17-x-y and the second electrode 15 of the (adjacent) element 17-x-(y+1) are formed by one straight line. In Fig. 9 only a part of insulating layer 8 and buffer layer 9 is shown in order to illustrate the structure of the underlying layers. The same applies to buffer layer 9 in Fig. 8 and Fig. 10.

Fig. 10 shows a straight insulator line 8. Benefit is the direct contact to the display element 19. The lower distance between first pixel electrode 4 and second pixel electrode 13 results in a higher electrical field. In this case lower voltages can be applied to control the pixel. This effect can be improved by applying a straight buffer layer line 9.

While this invention has been described in conjunction with specific embodiments thereof, it is evident that many alternatives, modifications and variations will be apparent to those skilled in the art. Accordingly, the preferred embodiments of the invention as set forth herein are intended to be illustrative, not limiting. Various changes may be made without departing from the scope of the invention as defined in the following claims.

### List of Reference Signs

- 1: source electrode
- 2: drain electrode
- 3: gate electrode
- 4: first pixel electrode
- 5: data line
- 6: select line
- 7: organic semiconductor
- 8: insulator
- 9: buffer layer
- 10: storage capacitor
- 11: organic thin film transistor
- 12: pixel area
- 13: second pixel electrode of the display element
- 14: first electrode of storage capacitor
- 15: second electrode of storage capacitor
- 16: second select line
- 17: active matrix element
- 18: substrate
- 19: display element (without first pixel electrode)
- 20: observer
- 21: functional display layer
- 22: display element substrate

- n: overall number of data lines
- m: overall number of select lines
- x: row number of active matrix element
- y: column number of active matrix element

- Vcom: common potential

## Claims

1. Method of producing an active matrix back plane circuit comprising the following steps:
- application of a plurality of data lines (5-1 to 5-n), a plurality of first pixel electrodes (4), a plurality of first electrodes (14) of a storage capacitor (10) and a plurality of pairs of source electrodes (1) and drain electrodes (2) on a substrate (18), thereby defining a plurality of active matrix elements (17-x-y),
- application of an organic semiconducting material (7) between the pairs of source electrodes (1) and drain electrodes (2),
- application of a layer of an insulating material (8) over the source electrodes (1), drain electrodes (2), organic semiconducting material (7) and first electrodes (14) of the storage capacitor (10),
- application of a plurality of gate electrodes (3), a plurality of select lines (6-y) and a plurality of second electrodes (15) of the storage capacitor (10), the second electrodes (15) contacting the gate electrodes (3),
**wherein**
the gate electrode (3) of an active matrix element (17-x-y), the respective select line (6-y) and the second electrode (15) of the storage capacitor (10) of an adjacent active matrix element (17-x-(y+1)) are formed by the application of one straight line of a conducting material;
the plurality of pairs of source electrodes (1) and drain electrodes (2) are formed by using a lithography process; and
the organic semiconducting material (7) is formed by using inkjet printing.

2. The method of claim 1, wherein the layer of insulating material (8) is formed by spin coating or inkjet printing.

3. The method of one of claims 1 or 2, wherein the one straight line of the conducting material is formed by inkjet printing or by evaporation through a shadow mask.

4. The method according to one of the preceding claims, wherein a passivation or buffer layer (9) is formed by spin coating.

## Patentansprüche

1. Verfahren zur Produktion einer Aktivmatrix-Rückwandschaltung, das folgende Schritte umfasst:
- Aufbringung einer Vielzahl von Datenleitungen (5-1 bis 5-n), einer Vielzahl von ersten Pixelelektroden (4), einer Vielzahl von ersten Elektroden (14) eines Speicherkondensators (10) sowie einer Vielzahl von Paaren von Source-Elektroden (1) und Drain-Elektroden (2) auf einem Substrat (18), wodurch eine Vielzahl von Aktivmatrix-Elementen (17-x-y) definiert wird,
- Aufbringung eines organischen halbleitenden Materials (7) zwischen den Paaren von source-Elektroden (1) und Drain-Elektroden (2),
- Aufbringung einer Schicht eines isolierenden Materials (8) über den Source-Elektroden (1), den Drain-Elektroden (2), dem organischen, halbleitenden Material (7) sowie den ersten Elektroden (14) des Speicherkondensators (10),
- Aufbringung einer Vielzahl von Gate-Elektroden (3), einer Vielzahl von Auswahlleitungen (6-y) sowie einer Vielzahl von zweiten Elektroden (15) des Speicherkondensators (10), wobei die zweiten Elektroden (15) mit den Gate-Elektroden (3) in Kontakt stehen, wobei
die Gate-Elektrode (3) eines Aktivmatrix-Elements (17-x-y), die entsprechende Auswahlleitung (6-y) sowie die zweite Elektrode (15) des Speicherkondensators (10) eines benachbarten Aktivmatrix-Elements (17-x-(y+1)) durch die Aufbringung einer geraden Leitung eines leitenden Materials gebildet werden;
die Vielzahl von Paaren von Source-Elektroden (1) und Drain-Elektroden (2) durch Verwendung eines Lithographieverfahrens gebildet werden; und
das organische halbleitende Material (7) durch Tintenstrahldruck gebildet wird.

2. Das Verfahren nach Anspruch 1, wobei die Schicht isolierenden Materials (8) durch Rotationsbeschichtung oder Tintenstrahldruck gebildet wird.

3. Das Verfahren nach einem der Ansprüche 1 oder 2, wobei die eine gerade Leitung des leitenden Materials durch Tintenstrahldruck oder durch Aufdampfen durch eine Lochmaske gebildet wird.

4. Das Verfahren nach einem der vorangehenden Ansprüche, wobei durch Rotationsbeschichtung eine Passivierungs- oder Pufferschicht (9) gebildet wird.

## Revendications

1. Procédé de production d'un circuit de fond de panier à matrice active comprenant les étapes suivantes :
- l'application de multiple lignes de données (5-1 à 5-n), de multiples premières électrodes de pixels (4), de multiples premières électrodes (14) d'un condensateur (10) de stockage et de multiples paires d'électrodes de source (1) et d'électrodes de drain (2) sur un substrat (18), définissant ainsi de multiples éléments (17-x-y) de matrice active,
- l'application d'une matière semi-conductrice organique (7) entre les paires d'électrodes de source (1) et d'électrodes de drain (2),
- l'application d'une couche d'une matière isolante (8) au-dessus des électrodes de source (1), des électrodes de drain (2), de la matière semi-conductrice organique (7) et des premières électrodes (14) du condensateur (10) de stockage,
- l'application de multiples électrodes de grille (3), de multiples lignes de sélection (6-y) et de multiples secondes électrodes (15) du condensateur (10) de stockage, les secondes électrodes (15) étant en contact avec les électrodes de grille (3),
dans lequel
l'électrode de grille (3) d'un élément (17-x-y) de matrice active, la ligne de sélection respective (6-y) et la seconde électrode (15) du condensateur de stockage (10) d'un élément adjacent (17-x-(y+1)) de la matrice active sont formées par l'application d'une ligne droite d'une matière conductrice ;
les multiples paires d'électrodes de source (1) et d'électrodes de drain (2) sont formées par l'utilisation d'un processus lithographique ; et
la matière semi-conductrice organique (7) est formée par l'utilisation d'une impression à jet d'encre.

2. Procédé selon la revendication 1, dans lequel la couche de matière isolante (8) est formée par revêtement par centrifugation ou par impression par jet d'encre.

3. Procédé selon l'une des revendications 1 et 2, dans lequel la ligne droite de matière conductrice est formée par une impression par jet d'encre ou par évaporation à travers un masque perforé.

4. Procédé selon l'une des revendications précédentes, dans lequel une couche (9) de passivation ou tampon est formée par revêtement par centrifugation.
